# EUROPEAN PATENT APPLICATION

(11) **EP 1 215 655 A1**
(43) Date of publication of application: **19.06.2002**
(21) Application number: 01310042.5
(22) Date of filing: 30.11.2001
(51) Int. Cl.: G10L 15/22

(54) **Voice service system and method**

(30) Priority: 09.12.2000 GB 0030078
(71) Applicant: Hewlett-Packard Company, Palo Alto, CA 94304 (US)
(72) Inventor: Thomas, Andrew, Atherton, California 94027-1931 (US); Squibbs, Robert Francis, Easter Common, Bristol BS35 5RJ (GB); Hickey, Marianne, Bristol BS7 8RQ (GB); Brittan, Paul St John, Claverham, Somerset BS49 4NE (GB)
(74) Representative: Squibbs, Robert Francis

(57) **Abstract**

A voice service system is provided with an interactive voice response unit (11) for interactively dealing with a call from a human caller (2), an operator subsystem (12) by which a human operator (25) can verbally interact with the caller, and a routing manager (10) for transferring handling of the call between the voice response unit (11) and the operator subsystem (12). The operator's verbal interaction with the caller is done through a synthesised voice in order to mask from the caller that they are now talking to a human operator. This permits the operator (25) to return handling of a call back to the voice response unit (11) without offending the caller.

## Description

### Field of the Invention

The present invention relates to a method and system for providing voice services.

### Background of the Invention

Automated interactive voice services use voice synthesis technology to converse with a caller in a dialogue. Callers become used to this synthesised voice in the dialogue. However, it is not possible to completely understand human speech or anticipate users requests and responses in automated systems. Therefore to assist in problem situations automated voice response systems generally provide a path to a human assistant (often referred to as an operator or agent). Once this person is contacted, the change in voice cues the caller that a real person has taken over and can resolve their problem. Typically, a brief period of human interaction can resolve the problem that the caller was experiencing and automatic response could be continued. However, passing a caller back to an automatic system is considered somewhat rude and the caller enquiry is normally completed by the human operator.

It is an object of the present invention to provide a method and apparatus facilitating the more efficient use of operators in a voice response service.

### Summary of the Invention

According to one aspect of the present invention, there is provided a voice service system comprising:
- an interactive voice response unit for interactively dealing with a call from a human caller,
- an operator subsystem by which a human operator can verbally interact with the caller, and
- a transfer arrangement for transferring handling of the call at least in one direction between the operator subsystem and the voice response unit;
the operator subsystem including a masking arrangement for causing the operator's verbal interaction with the caller to be done through a synthesised voice whereby to mask from the caller that they are talking to a human operator, the transfer arrangement being usable by the operator to have handling of a call transferred to the voice response unit.

According to another aspect of the present invention, there is provided a voice service system comprising an interactive voice response unit for interactively dealing with a call from a human caller, an operator subsystem by which a human operator can verbally interact with the caller, and transfer means for transferring handling of the call between the voice response unit and the operator subsystem; the voice service system having masking means for causing the operator's verbal interaction with the caller to be done through a synthesised voice whereby to mask from the caller that they are now talking to a human operator, the transfer means being usable by the operator to have handling of a call transferred to the voice response unit.

According to a further aspect of the present invention, there is provided a method of providing voice services in respect of a call placed by a human caller, the method comprising the steps of:
(a) carrying out an verbal interaction between the caller and a human operator;
(b) at the instigation of the operator, transferring the call to an interactive voice response unit; and
(c) continuing verbal interaction with the caller through the voice response unit.
the operator's verbal interaction with the caller in step (a) being done through a synthesised voice whereby to mask from the caller that they are talking to a human operator.

According to a still further aspect of the present invention, there is provided a method of providing voice services in respect of a call placed by a human caller, the method comprising the steps of:
(a) enabling voice interaction between the caller and a voice response unit;
(b) analysing the caller's interaction with the voice response unit to determine whether the caller requires operator assistance;
(c) where this analysis indicates that operator assistance is required, transferring the call to a human operator; and
(d) carrying out a verbal interaction between the caller and a human operator, this interaction being done through a synthesized voice whereby to mask from the caller that they are talking to a human operator.

### Brief Description of the Drawings

A voice service system and method, both embodying the invention, will now be described, by way of non-limiting example, with reference to the accompanying diagrammatic drawings, in which:
- **Figure 1** is a diagram of a prior art voice service system; and
- **Figure 2** is a diagram of a voice service system embodying the invention.

### Best Mode of Carrying Out the Invention

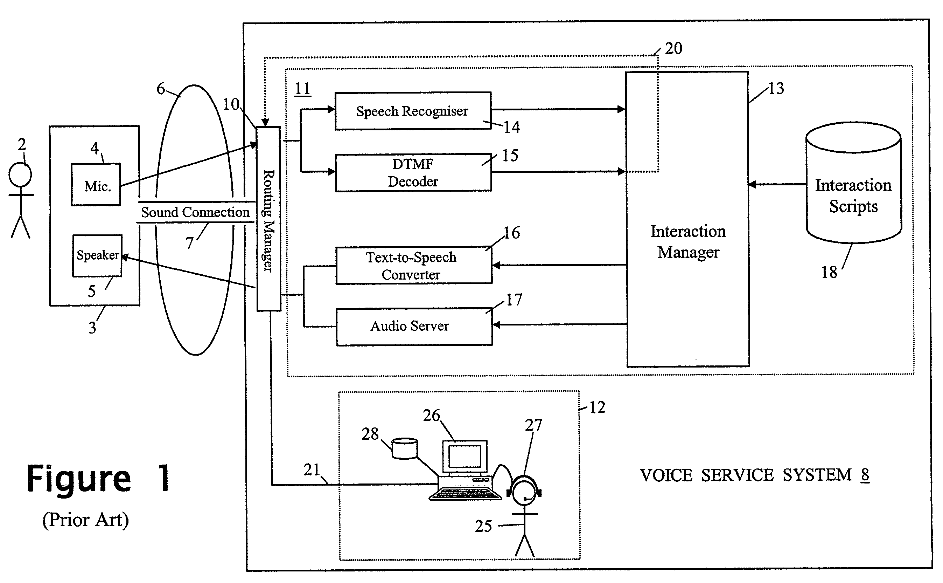

Figure 1 shows a prior art voice service system 8 which a caller 2 can contact using equipment 3 to place a voice call over a sound connection 7 (that is, a channel for signals representing sound) established through communications infrastructure 6. The equipment 3 includes microphone 4 and loudspeaker 5 and is, for example, a telephone. The communications infrastructure is typically a telephone network (such as a PSTN or PLMN) but may also or alternatively comprise the internet. The sound channel 7 can, for example, be a circuit-switched voice circuit or a VoIP connection across a packet network.

The voice service system 8 comprises an automated interactive voice response (IVR) unit 11, an operator subsystem 12, and a routing manager 10 for transferring handling of a call between the IVR unit 11 and the operator subsystem 12.

The IVR unit comprises a plurality of channels each for handling a corresponding call and each substantially of the form shown in Figure 1. More particularly, on its input side each IVR channel comprises a speech recogniser 14 and a DTMF (Dual Tone Multi-Frequency) decoder 15 both of which feed an interaction manager 13 which decides what action to take on the basis of the received inputs and a current interaction script being followed. The current script is one loaded from a store 18 in dependence, for example, on the initial contact information associated with the caller (such as number dialled where the caller is communicating over a telephone network, different numbers corresponding to different desired services); the current script may alternatively depend on an option selected by the user from a preceding script, option selection being done either by recognition of a spoken choice or by having the user press an appropriate key to generate a DTMF code recognised by the DTMF decoder. Basic IVR units may not include a speech recogniser 14 and simply depend on the DTMF decoder 15 for collecting caller input; conversely, where a speech recogniser is provided, the DTMF decoder can be omitted.

On its output side, each IVR channel comprises a text-to-speech converter 16 for turning output text, provided by the interaction manager 13 from the current script, into synthesised voice output, and an audio server 17 for outputting richer sound material as commanded by the interaction manager. Again, one or other of the units 16, 17 can be omitted.

The operator subsystem comprises, in the present case, a plurality of operator workstations 26 with telephony capability, each workstation 26 being connectable to receive a call routed to it by routing manager 10 via a respective connection 21. An operator 25, with headset unit 27, can hear and talk to a caller routed to their workstation 26 and can use the latter to pull up scripts from a store 28 and display them on the screen of the workstation 26 for use in conversing with the caller.

In operation of the voice service system, a caller would normally be routed by routing manager 10 to an available channel of the IVR unit 11 and an appropriate script would then be run by the interaction manager 13 for that channel (how scripts are selected has already been described above).

The caller will normally be informed as part of the opening of a script, that they can ask for operator assistant at any time by pressing a particular key. If the caller does this, the key press is detected by DTMF decoder 15 causing the interaction manager 13 to inform the routing manager 10. The routing manager then proceeds to find a free operator 25 and routes the call to the workstation 26 associated with that operator.

The operator converses with the caller to solve their problem and generally handles the call to completion.

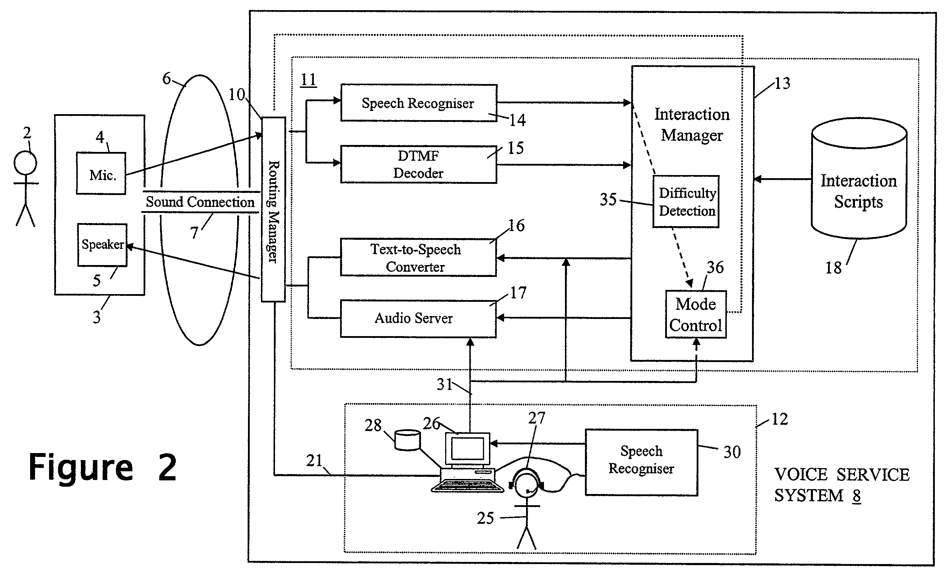

Figure 2 shows an implementation of the present invention as applied to the voice service system of Figure 1. More particularly, in the Figure 2 arrangement, upon a call being transferred to an operator 25, the operator's output to the caller is provided or converted into text message form and passed to a text-to-speech converter so as to be presented to the caller in a synthesised voice. As a result, the caller is masked from the fact that they are talking to a human operator which makes it socially easier for the operator to pass handling of the call back to the IVR unit.

In the Figure 2 embodiment, the switching of call handling to an operator is triggered by an analysis unit 35 that analyses the user's inputs to determine when a caller appears to be having difficulty - this may be indicated by an illogical sequence of choices, by detecting words of frustration, or by similar indicators. The analysis unit 35 informs a mode control unit 36 of the interaction manager which puts the latter in a passive mode where it ceases to be in control of handling the call; however, the IVR channel concerned remains associated with the call. The mode control unit also informs the routing manager 10 that the call should also be routed to a human operator which the routing manages then does, placing the operator subsystem in charge of handling the call.

The mode control 36 and analysis unit 35 together with the routing manager 10, form a transfer arrangement for transferring the call between the IVR channel and the operator subsystem; as will be seen below, in the Figure 2 embodiment, this transfer can be in either direction, with transfer from the operator subsystem to the IVR channel being effected under operator control.

It may be noted that the transfer of call-handling control to the operator subsystem is preferably not done by specific caller selection (e.g. by an appropriate key press) as this creates an expectation of a human voice, not a synthesised one; however, transfer can be initiated by specific caller selection in appropriate cases.

Once call handling has been transferred to the operator subsystem, the operator can proceed in several ways to produce text messages for output to the caller, including:
- by typing in messages using the keyboard of workstation 26;
- by selecting scripts called up onto the workstation display from store 28;
- by voice input to speech recogniser 30 that produces a text output, this latter preferably being fedback to the workstation for display and editing as required by the operator.
The text messages are passed from workstation 26 over connection 31 (for example, a LAN) to the text-to-speech converter 16 of the IVR channel still associated with the call. In this manner, the output from the operator is presented to the caller in the identical synthesised voice as used when the IVR channel was in charge of handling the call.

Because the resources of the IVR channel are still associated with the call, the operator can also call upon the audio server to play any material considered appropriate.

When the operator has solved the caller's current difficulty, control of handling the call is passed back to the interaction manager 13 by the operator using workstation 26 to signal to the mode control unit 36, this latter then being responsible for changing the operating mode of the interaction unit back into an active state, and for informing the routing manager 10 that the call can be taken back from the operator subsystem, thereby freeing up the operator for another call. Of course, where the operator deals fully with the caller and their reason for calling, the operator simply terminates the call rather than passing it back to the IVR channel.

The advantages of the Figure 2 arrangement include that the user experience is preserved and that operator intervention is limited to places where help is really required.

Many variants are, of course, possible to the Figure 2 arrangement. For example, the IVR channel could be freed up when a call is transferred to the operator subsystem in which case a separate text-to-speech converter would be required to produce a synthesised voice output for passing to the caller.

Furthermore, determining when an operator should intervene could be done by "eavesdropping" on the exchanges between callers and the IVR channels; this eavesdropping can probably best be done by viewing a transcript of the exchanges rather than by directly listening in since a transcript gives a history of the progression of an exchange. The eavesdropping approach can be implemented additionally or alternatively to the automatic analysis effected by unit 35.

The operator's proposed text message responses can be automatically analysed and corrected for grammar and complexity and can even be changed to a style more like that used in the scripts run by the interaction manager 13.

An incoming call can be passed directly to the operator subsystem without the user having first been through an IVR interaction and the analysis unit 35 having detected a problem requiring operator intervention; for example, the DTMF decoder 15 may detect an input indicating an issue needing direct operator input. In such cases, it is still advantageous for the operator's input to be masked by being provided through the text-to-speech converter 16 for the reasons already noted, namely to disguise the transfer of the user to an IVR interaction. Indeed, all calls could initially be routed to a operator, the operator then deciding on the basis of their initial interaction with each caller whether the caller can be transferred to a standard IVR script. Thus the transfer arrangement (which in Figure 2 comprised the mode control 35, the analysis unit 35, and the routing manager 10) may in certain cases simply provide for transferring a call from the operator subsystem to the IVR channel without providing for the reverse transfer (in which case, the transfer arrangement may simply comprise the routing manager with operator input to control transfer to an IVR channel).

## Claims

1. A voice service system comprising:
- an interactive voice response unit for interactively dealing with a call from a human caller,
- an operator subsystem by which a human operator can verbally interact with the caller, and
- a transfer arrangement for transferring handling of the call at least in one direction between the operator subsystem and the voice response unit;
the operator subsystem including a masking arrangement for causing the operator's verbal interaction with the caller to be done through a synthesised voice whereby to mask from the caller that they are talking to a human operator, the transfer arrangement being usable by the operator to have handling of a call transferred to the voice response unit.

2. A voice service system according to claim 1, wherein the masking arrangement comprises text response means for generating text messages from the operator, and means for passing these messages to a text-to-speech converter for output to the caller.

3. A voice service system according to claim 2, wherein the text-to-speech converter is part of the voice response unit and provides the same synthesised voice to the caller whether the call is being handled by the operator subsystem or by the voice response unit.

4. A voice service system according to claim 2, wherein the text response means comprises a keyboard for operator entry of text messages.

5. A voice service system according to claim 2, wherein the text response means comprises a speech recogniser for receiving voice input from the operator and generating text messages.

6. A voice service system according to claim 5, wherein the text messages output by the speech recogniser are passed to an editing console of the operator subsystem to enable the operator to check and edit the messages prior to output to the text-to-speech converter.

7. A voice service system according to any one of the preceding claims, wherein the transfer arrangement includes an analysis subsystem for analysing the caller's inputs when the voice response unit is handling the call whereby to determine whether the caller requires operator assistance; the analysis subsystem being operative, upon determining that the caller requires operator assistance, to cause the transfer arrangement to transfer the call to the operator subsystem.

8. A voice service system comprising an interactive voice response unit for interactively dealing with a call from a human caller, an operator subsystem by which a human operator can verbally interact with the caller, and transfer means for transferring handling of the call between the voice response unit and the operator subsystem; the voice service system having masking means for causing the operator's verbal interaction with the caller to be done through a synthesised voice whereby to mask from the caller that they are now talking to a human operator, the transfer means being usable by the operator to have handling of a call transferred to the voice response unit.

9. A method of providing voice services in respect of a call placed by a human caller, the method comprising the steps of:
(a) carrying out an verbal interaction between the caller and a human operator;
(b) at the instigation of the operator, transferring the call to an interactive voice response unit; and
(c) continuing verbal interaction with the caller through the voice response unit.
the operator's verbal interaction with the caller in step (a) being done through a synthesised voice whereby to mask from the caller that they are talking to a human operator.

10. A method according to claim 9, wherein the operator's verbal interaction with the caller involves generating a text message from operator input and passing this message through a text-to-speech converter to output the operator input in said synthesized voice.

11. A method according to claim 10, wherein the text-to-speech converter is part of the voice response unit and provides the same synthesised voice to the caller whether the call is interaction with the operator or the voice response unit.

12. A method according to claim 10, wherein the operator generates the text message using a keyboard.

13. A method according to claim 10, wherein the operator generates the text message through a speech recogniser.

14. A method according to claim 13, wherein the text message output by the speech recogniser is checked and, where required, edited by the operator at an editing console prior to output to the text-to-speech converter.

15. A method of providing voice services in respect of a call placed by a human caller, the method comprising the steps of:
(a) enabling voice interaction between the caller and a voice response unit;
(b) analysing the caller's interaction with the voice response unit to determine whether the caller requires operator assistance;
(c) where this analysis indicates that operator assistance is required, transferring the call to a human operator; and
(d) carrying out a verbal interaction between the caller and a human operator, this interaction being done through a synthesized voice whereby to mask from the caller that they are talking to a human operator.

16. A method according to claim 15, wherein the operator's verbal interaction with the caller involves generating a text message from operator input and passing this message through a text-to-speech converter to output the operator input in said synthesized voice.

17. A method according to claim 16, wherein the text-to-speech converter is part of the voice response unit and provides the same synthesised voice to the caller whether the call is interaction with the operator or the voice response unit.

18. A method according to claim 16, wherein the operator generates the text message using a keyboard.

19. A method according to claim 16, wherein the operator generates the text message through a speech recogniser.
